# EUROPÄISCHE PATENTSCHRIFT

(11) **EP 1 543 059 B1**
(45) Veröffentlichungstag und Bekanntmachung des Hinweises auf die Patenterteilung: **08.08.2007**
(21) Anmeldenummer: 03797973.9
(22) Anmeldetag: 25.09.2003
(51) Int. Cl.: C08G 63/80, C08G 63/78

(54) **VERFAHREN UND VORRICHTUNG ZUR ERHÖHUNG DER GRENZVISKOSITÄT VON POLYESTER-MATERIAL MITTELS FESTPHASENPOLYMERISATION**
METHOD AND DEVICE FOR INCREASING THE INTRINSIC VISCOSITY OF POLYESTER MATERIAL BY MEANS OF SOLID PHASE POLYMERISATION
PROCEDE ET DISPOSITIF POUR AUGMENTER LA VISCOSITE INTRINSEQUE D'UN MATERIAU POLYESTER PAR POLYMERISATION EN PHASE SOLIDE

(30) Priorität: 25.09.2002 AT 14332002
(43) Veröffentlichungstag der Anmeldung: 22.06.2005
(73) Patentinhaber: STARLINGER & CO. GESELLSCHAFT MBH, 1060 Wien (AT)
(72) Erfinder: FELLINGER, Markus, A-4073 Wilhering (AT); LOVRANICH, Christian, A-2564 Weissenbach/Triesting (AT)
(74) Vertreter: Margotti, Herwig Franz
(86) Internationale Anmeldenummer: PCT/AT2003/000284
(87) Internationale Veröffentlichungsnummer: WO 2004/029130

(56) Entgegenhaltungen:
- US-A- 4 370 302
- US-A1- 2002 026 030

## Beschreibung

Die Erfindung betrifft ein Verfahren und eine Vorrichtung zur Erhöhung der Grenzviskosität von Polyester-Material mittels Festphasenpolymerisation, wobei das Polyester-Material in einem Wärmebehandlungsbehälter wärmebehandelt wird.

Bei der Herstellung hochmolekularer Polyester, wie beispielsweise PET und PEN, macht man sich ein einzigartiges Verhalten von Polyester unter den Kunststoffen zunutze, wonach bei Verweilen von Polyester unter hohen Temperaturen und Vakuum oder Inertgas, um den oxidativen Abbau zu verhindern, Polykondensation der Polyester-Moleküle auftritt und sich damit die Viskosität des Polyesters erhöht. Diese Gewinnung hochmolekularer Polyester aus niedrig-molekularem Polyester-Ausgangsmaterial erfolgt üblicherweise mittels Schmelzpolymerisation oder Festphasenpolymerisation oder einer Kombination aus beiden Verfahren.

Bei der Schmelzpolymerisation wird Polyesterschmelze bei Temperaturen um ca. 270°C bis 300°C für ca. 30 Minuten bis 5 Stunden unter starkem Vakuum von ca. 1 mbar verarbeitet. Nachteilig ist hierbei, dass auf Grund der hohen Verarbeitungstemperaturen der eingangs erläuterte oxidative Abbauprozess des Polyesters stattfindet, der zur Gelbfärbung führt und der Polykondensation des Polyesters entgegenwirkt. Die durch Schmelzpolymerisation erzielbaren Grenzviskositätswerte liegen bei ca. 0,6 IV (=Intrinsic Viscosity).

Bei der Festphasenpolymerisation wird die Polyesterschmelze üblicherweise durch mehrere Düsen extrudiert, und die dabei entstehenden Kunststoffstränge werden darauffolgend in einem Wasserbad abgekühlt. Nach der Erhärtung der Kunststoffstränge werden diese granuliert, d.h. zu Pellets geschnitten. Durch die schnelle Abkühlung liegt das Polyester im amorphen Zustand vor. Dies ist wichtig, da ursprünglich transparente Polyester-Materialien im amorphen Zustand durchsichtig bleiben, wogegen bei langsamer Abkühlung Polyester einen kristallinen Zustand einnimmt, in dem sich ursprünglich transparentes Material weiß verfärbt. Zur weiteren Verarbeitung muss das Polyestergranulat wieder erwärmt werden, wobei es im Bereich der Kristallisationstemperatur (80 - 120 °C) zu einem Verkleben der Granulatkörper kommt. Daher wird das Granulat zunächst einem sog. Kristallinisator zugeführt, in dem es unter starkem Rühren auf eine Temperatur über der Kristallinisationstemperatur gebracht wird, um die Rieselfähigkeit der Granulatkörner für die weitere Behandlung zurückzugewinnen, was für den Transport und die Trocknung in einem Behälter ohne Rührwerk von großer Bedeutung ist. In kristalliner Form nimmt das Granulat darüber hinaus weniger Feuchte auf und erlaubt dadurch kürzere Verweilzeiten während der Trocknung. Das Granulat wird danach einem Festphasenpolymerisations-Behälter, auch SSP (Solid State Polymerisation)-Reaktor oder Wärmebehandlungs-Behälter genannt, zugeführt und darin auf ca. 220 bis 250 °C erwärmt und anschließend für ca. 1-40 Stunden unter diesen Bedingungen belassen, bis die gewünschte Grenzviskosität erreicht ist.

Die Erwärmung des Polyester-Granulats im SSP-Reaktor wird nach dem Stand der Technik entweder mittels eines Inertgasstromes (z.B. Stickstoff) als Wärmeträgermedium durchgeführt, der - außerhalb des Reaktors erhitzt - den Reaktor und das darin befindliche Granulat durchströmt, dabei seine Wärme an das Granulat abgibt und anschließend wieder abgesaugt wird; oder mittels Heizelementen in einem evakuierten Reaktor.

Nachteilig an der Erwärmung durch einen Inertgasstrom ist die Tatsache, dass die verwendeten technischen Gase (z.B. Stickstoff) teuer sind und daher sowie aus Umweltschutzgründen in einem geschlossenen Kreislauf geführt werden müssen. Dieser geschlossene Kreislauf bedingt auch, dass aufwändige Reinigungseinrichtungen für den Inertgasstrom vorgesehen werden müssen, um aus dem Granulat aufgenommene Schadstoffe und Verunreinigungen auszufiltern. Die Realisierung eines solchen Reaktors rechnet sich daher nur für riesige Anlagen in der Größenordnung eines Durchsatzes von 20 Tonnen Polyestergranulat pro Tag und mehr.

Die Erwärmung des Granulats in einem unter Vakuum stehenden Behälter ist insofern mit Nachteilen verbunden, als das Vakuum ein exzellenter Wärmeisolator ist und durch diese Eigenschaft einer Erwärmung des Granulats entgegenwirkt. Es ist dadurch erforderlich, entweder extrem lange Verweilzeiten des Granulats im Behälter vorzusehen, oder bei einer Erwärmung durch an der Behälteraußenseite angebrachte Heizelemente im Behälterinneren ein oder mehrere Rührwerke zur Durchmischung des Granulats vorzusehen, oder technisch aufwändige bewegliche Heizelemente, die gleichzeitig als Mischelemente dienen, im Behälterinneren vorzusehen. All diese konstruktiven Maßnahmen werfen jedoch technische Probleme wie die Ausbildung toter Räume, in denen das Granulat hängen bleibt, Umlenkungen des Granulatflusses, ungleichmäßige Erwärmung, hoher Energieverbrauch etc. auf und sind auch aus Kostengründen unerwünscht. Eine kontinuierliche Beschickung des Erwärmungsbehälters mit Granulat wird aus den genannten Gründen sehr erschwert.

Ziel der vorliegenden Erfindung ist es daher, ein Verfahren und eine Vorrichtung der eingangs angeführten Art bereitzustellen, durch welche die geschilderten Nachteile des Standes der Technik gemildert oder gar beseitigt werden.

Dies wird beim erfindungsgemäßen Verfahren dadurch erreicht, dass das Polyester-Material vor seiner Förderung in den Wärmebehandlungsbehälter in einen Vorwärmbehälter eingebracht wird, in dem es auf eine Wärmebehandlungstemperatur des Wärmebehandlungsbehälters oder darüber, vorzugsweise im Wesentlichen auf die Wärmebehandlungstemperatur, erwärmt und nach Erreichen dieser Temperatur an den Wärmebehandlungsbehälter abgegeben wird. Die Wärmebehandlungstemperatur beträgt im Allgemeinen zumindest 180 °C. Der Vorwärmbehälter kann im Vergleich zum Wärmebehandlungsbehälter klein sein, so dass die darin enthaltene relativ kleine Menge an Polyester-Material rasch auf die vorgesehene Temperatur erwärmt werden kann, wodurch sich eine geringe Verweilzeit im Vorwärmbehälter ergibt. Nach Erreichen der vorgesehenen Temperatur kann der gesamte Inhalt des Vorwärmbehälters auf einmal, d.h. chargenweise, an den Wärmebehandlungsbehälter abgegeben werden und daraufhin der Vorwärmbehälter neu mit Polyester-Material beschickt werden. Der Vorwärmbehälter ist aufgrund der kurzen Verweilzeit gut im diskontinuierlichen Betrieb betreibbar.

Aus Kostenvorteilen und zugunsten einer einfacheren Konstruktion im Vergleich zu oben erläuterten Inertgas-Anlagen wird der Vorwärmbehälter unter Vakuum, vorzugsweise zwischen 0,1 und 10 mbar, betrieben werden, wobei die Beheizung des Vorwärmbehälters mittels Konvektionswärme erfolgen erfolgen kann, indem der Vorwärmbehälter mit möglichst großen Oberflächen ausgeführt wird, die beheizt sind. Die Beheizung der Behälteroberflächen wiederum kann mittels elektrischer Heizstäbe oder einem Wärmeträgermedium wie Öl erfolgen, das die Behälteroberflächen durchströmt oder umströmt. Diese Art der Beheizung bringt den Vorteil, daß der Vorwärmbehälter, mit geeigneten Schiebern oder Klappen versehen, gleichzeitig als Schleusenbehälter für den Wärmebehandlungsbehälter verwendet werden kann, um eine möglichst kurze Verweilzeit des Polyesters unter Luftsauerstoff zu erzielen, bzw. den Luftsauerstoff ab einer Temperatur von 160 - 180°C komplett auszuschließen. Die Ausführung des Behälters beinhaltet ein beheiztes Rührwerk, um mittels ständigem Rühren die Temperatur im Behälter und somit die Durchwärmung des Polyesters möglichst gleichmäßig zu halten.

Baulich und preislich günstig erweist sich, wenn der Vorwärmbehälter in den Eingangsbereich des Wärmebehandlungsbehälters integriert ist.

Zur vorteilhaften Durchführung der Anfahrphase des erfindungsgemäßen Verfahrens ist vorgesehen, dass am Ausgang des Wärmebehandlungsbehälters die Temperatur des Polyester-Materials gemessen wird und bei ungenügender Temperatur das Material an den Vorwärmbehälter oder den Eingang des Wärmebehandlungsbehälters zurückgeleitet wird. Sollte der Reaktor längere Zeit still stehen, so dass das darin enthaltene Granulat unter die Wärmebehandlungstemperatur absinkt, so ist es dennoch nicht erforderlich, den Wärmebehandlungsbehälter ganz zu leeren und das ausgetragene Material wieder zu extrudieren, sondern das Polyester-Material wird solange im Kreislauf geführt, bis es die erforderliche Temperatur am Ausgang besitzt, wobei es in diesem Fall auch die notwendige Verweilzeit erfahren hat.

Da aufgrund der notwendigen Verweilzeiten im Vorwärmbehälter und im Wärmebehandlungsbehälter der Durchsatz des Polyester-Materials geringer ist als die übliche Granulierleistung einer vorgeschalteten Granuliereinheit, kann es sich als günstig erweisen, wenn das Granulat nach seiner Herstellung auf eine Vielzahl von Vorwärmbehältern mit nachgeschalteten Wärmebehandlungsbehältern aufgeteilt wird, bzw. aus einem Vorwärmbehälter in mehrere Wätmebehandlungsbehälter gefördert wird, um zu einem ausgewogenen Verhältnis zwischen den Durchsätzen der Granuliereinheit und den Wärmebehandlungsbehältern zu kommen.

Vorteilhaft kann das wärmebehandelte Polyester-Material nach dem. Austrag aus dem Wärmebehandlungsbehälter noch im erwärmten Zustand einem Extruder oder einer sahmelzeaufbereitenden Einrichtung, z.B. einer Spritzgussmaschine übergeben werden, sodass die im Material gespeicherte Wärme optimal ausgenutzt wird.

Die erfindungsgemäße Vorrichtung zur Erhöhung der Grenzviskosität von Polyester-Material mittels Festphasenpolymerisation durch Wärmebehandlung in einem Wärmebehandlungsbehälter ist dadurch gekennzeichnet, dass dem Wärmebehandlunsbehälter ein Vorwärmbehälter zur Erwärmung des Polyester-Materials auf eine Wärmebehandlungstemperatur des Wärmebehandlungsbehälters oder darüber, vorzugsweise im Wesentlichen auf die Wämebehmfflungswraperatur, vorgeschaltet ist. Im Vorwärmbehälter kann das Polyester-Material in wesentlich kürzerer Zeit auf die vorgesehene Temperatur gebracht werden, als es im Warmebehandlungsbehälter allein möglich wäre. An den Vorwärmbehälter ist ein Vakuum, vorzugsweise zwischen 0,1 und 10 mbar, angelegt, wobei der Vorwärmbehälter zur schnelleren Erwärmung des darin beinhalteten Granulats ein beheiztes Rührwerk aufweist. Ein diskontinuierlicher Betrieb des Vorwärmbehälters kann erreicht werden, wenn er mit dem Wärmebehandlungsbehälter über einen Schieber verbunden ist.

Zur Vermeidung der bekannten mit Inertgaskreisläufen verbundenen Probleme ist in einer bevorzugten Ausführungsform der Erfindung an den Wärmebehandlungsbehälter ein Vakuum, vorzugsweise zwischen 0,1 und 10 mbar, anlegbar. Eine solche Anlage ist auch in kleineren und mittleren Baugrößen rentabel.

Mit der erfindungs gemäßen Vorrichtung ist es möglich, den Vorwärmbehälter diskontinuierlich zu betreiben, wobei nur geringe Verweilzeiten des Polyester-Materials erforderlich sind, den Wärmebehandlungsbehälter aber, der das Polyester-Material zur Festkörperpolymerisation über eine beträchtlich längere Verweilzeit von 3-10 Stunden und mehr beinhalten muss, im kontinuierlichen Betrieb zu fahren, da das Material bereits mit der vorgesehenen Wärmebehandlungstemperatur eingebracht wird. Da somit im Gegensatz zum Stand der Technik eine geringere Heizleistung des Wärmebehandlungsbehälters erforderlich ist (da das Granulat nur auf der Beschickungstemperatur oder knapp darunter gehalten, nicht aber höher erhitzt werden muss), kann der Wärmebehandlungsbehälter eine Wandheizung aufweisen und damit Probleme mit Toträumen durch Innenheizung vermeiden, oder sogar ein unbeheizter, wärmeisolierter Behälter sein.

Einfachste Bauweise erzielt man, wenn der Vorwärmbehälter in den Eingangsbereich des Wärmebehandlungsbehälters integriert ist. Weiters kann am Ausgang des Wärmebehandlungsbehälters ein Temperatursensor zur Messung der Temperatur des Polyester-Materials und eine Rückführleitung für das Polyester-Material an den Vorwärmbehälter oder den Eingang des Wärmebehandlungsbehälters vorgesehen sein, wobei der Polyestermaterial-Austragsstrom in Abhängigkeit von seiner gemessenen Temperatur in die Rückführleitung umschaltbar ist.

Zur besseren Anpassung der erfindungsgemäßen Vorrichtung an den Durchsatz von vorgeschalteten Granuliereinheiten ist eine Vielzahl an Vorwärmbehältern mit nachgeschalteten Wärmebehandlungsbehältern, oder ein Vorwärmbehälter mit einer Vielzahl nachgeschalteter Wärmebehandlungsbehälter vorgesehen. Dem Wärmebehandlungsbehälter wiederum kann zur Minimierung von Wärmeverlusten ein Extruder oder eine schmelzeaufbereitende Einrichtung, z.B. eine Spritzgussmaschine, direkt nachgeschaltet sein.

Die Erfindung wird nun anhand nicht einschränkender Ausführungsbeispiele näher erläutert.

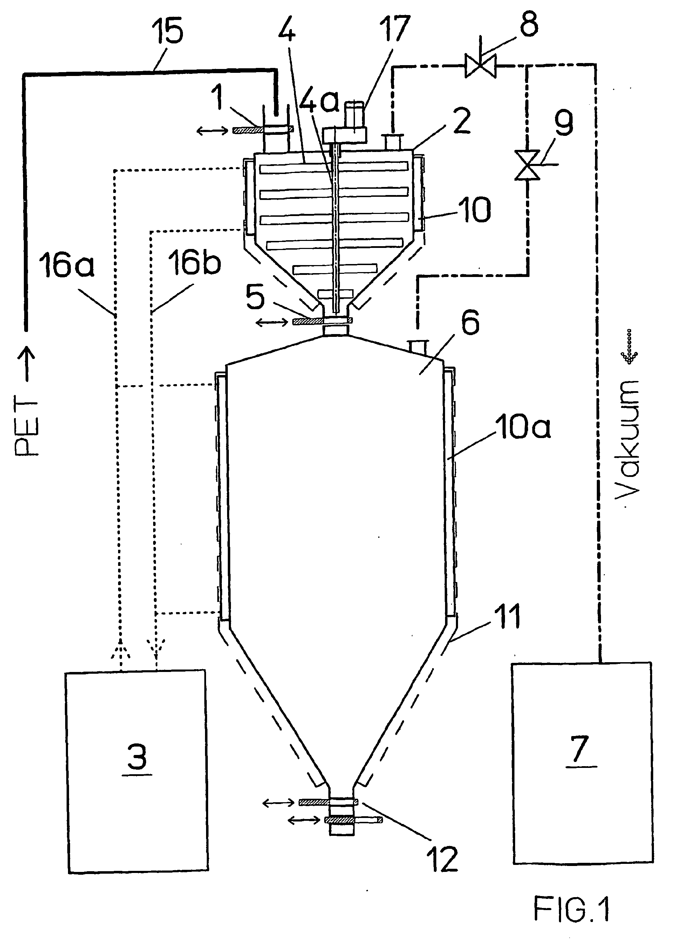

In den Zeichnungen zeigen Fig. 1 bis 4 vier Ausführungsformen der Erfindung schematisch in Diagrammen, wobei gleiche oder ähnliche Bauteile mit denselben Bezugszeichen versehen sind und in der folgenden Beschreibung nur einmal erläutert werden.

Fig. 1 zeigt eine erste Ausführung der Erfindung mit einem Vorwärmbehälter 2 mit einer vakuumdichten Einlassklappe 1, in die eine Leitung 15 zur Zufuhr von Polyester-Material mündet. Der Vorwärmbehälter 2 ist doppelwandig ausgeführt und wird mittels eines Heizgeräts 3 beheizt, das ein flüssiges Wärmeträgermedium (Öl, Wasser) erwärmt, das durch Heizzuleitungen 16a in den Zwischenraum (Wandheizung 10) der Doppelwände des Vorwärmbehälters 2 eingebracht, und nachdem es seine Wärme abgegeben hat, über Ableitungen 16b wieder zum Heizgerät 3 zurückgeführt wird. Zusätzlich wird der Vorwärmbehälter 2 von einem mittels Drehdurchführung 4a beheiztem Rührwerk 4 von innen erwärmt. Das Rührwerk 4 wird von einem Motor 17 angetrieben. Ein Auslassschieber 5 stellt eine verschließbare Verbindung zwischen dem Auslass des Vorwärmbehälters 2 und dem eigentlichen Wärmebehandlungsbehälter 6 her. Über eine Vakuumanlage 7 werden beide Behälter mittels Ventilsteuerung 8 und 9 unabhängig voneinander evakuiert. Der Wärmebehandlungsbehälter 6 weist lediglich eine Wandheizung 10a auf, in der Wärmeträgermedium aus dem Heizgerät 3 über die Zu- und Rückleitungen 16a, 16b zirkuliert. Die Wandheizung 10 ist so dimensioniert, dass im Behälterinneren befindliches Polyester-Material auf seiner Wärmebehandlungstemperatur gehalten wird, aber nicht höher erwärmt wird. Der Wärmebehandlungsbehälter 6 ist von einer Wärmeisolierung 11 umgeben, um die Wärmestrahlungsverluste zu kompensieren. Auslassseitig befindet sich am Wärmebehandlungsbehälter 6 ein Doppelschleusensystem 12, um ein kontinuierliches Vakuum im Wärmebehandlungsbehälter zu gewährleisten, dabei aber kontinuierlichen Materialaustrag zu gewährleisten.. Anstatt des auslassseitigen Doppelschleusensystems könnte auch eine vakuumdichte Zellradschleuse verwendet werden.

In einem Versuchsaufbau wurde ein Wärmebehandlungsbehälter mit einem Volumen von ca. 1000 Liter verwendet, das Volumen des vorgeschalteten Vorwärmbehälters betrug ca. 40 Liter.

Das erfindungsgemäße Verfahren wird in der Vorrichtung nach Fig. 1 folgendermaßen durchgeführt.

Das Polyestermaterial, z.B. PET, wird über geeignete Fördereinrichtungen wie Vakuumförderer, Förderschnecke oder die Leitung 15 über die geöffnete Einlassklappe 1 in den Vorwärmbehälter 2, der auf eine Wärmebehandlungstemperatur von 220°C vorgewärmt wurde, gefördert. Der Auslassschieber 5 des Vorwärmbehälters 2 zum Wärmebehandlungsbehälter 4 ist geschlossen. Das Ventil 8 der Vakuumanlage 7 zum Vorwärmbehälter ist geschlossen, das Ventil 9 der Vakuumanlage 7 zum Wärmebehandlungsbehälter 6 ist geöffnet, so dass nur der Wärmebehandlungsbehälter 6 evakuiert wird. Nach Befüllen des Vorwärmebehälters 2 mit einer Charge des Polyestermaterials werden die Einlassklappe 1 und das Vakuumventil 9 zum Wärmebehandlungsbehälter 6 geschlossen, so dass im Wärmebehandlungsbehälter das erzeugte Vakuum beibehalten wird. Danach wird das Vakuumventil 8 zum Vorwärmbehälter 2 geöffnet, und der Behälter wird evakuiert (vorzugsweise auf unter 5mbar). Anschließend wird das, Vakuumventil 9 zum Wärmebehandlungsbehälter 6 wieder geöffnet. Die in den Vorwärmbehälter 2 eingebrachte Charge des Polyestermaterials wird bis auf die Wärmebehandlungstemperatur von ca. 220 °C erwärmt. Nachdem das Polyestermaterial die gewünschte Temperatur angenommen hat, wird die Materialcharge unter Vakuum an den Wärmebehandlungsbehälter 6 übergeben, indem der Auslassschieber 5 geöffnet wird, bis der Inhalt des Vorwärmbehälters zur Gänze in den Wärmebehandlungsbehälter 6 gelangt ist, worauf der Auslasschieber 5 geschlossen wird und der Vorwärmbehälter von Neuem mit Poyestermaterial befüllt werden kann. Nach Erreichen der gewünschten Verweildauer im Wärmebehandlungsbehälter 6 wird nach dem FIFO-Prinzip (first in first out) Polyester-Material durch das Doppelschleusensystem 12 aus dem Wärmebehandlungsbehälter6 ausgetragen (die mittlere Austragstemperatur des Materials aus dem Wärmebehandlungsbehälter betrug im Versuchsaufbau 212 °C).

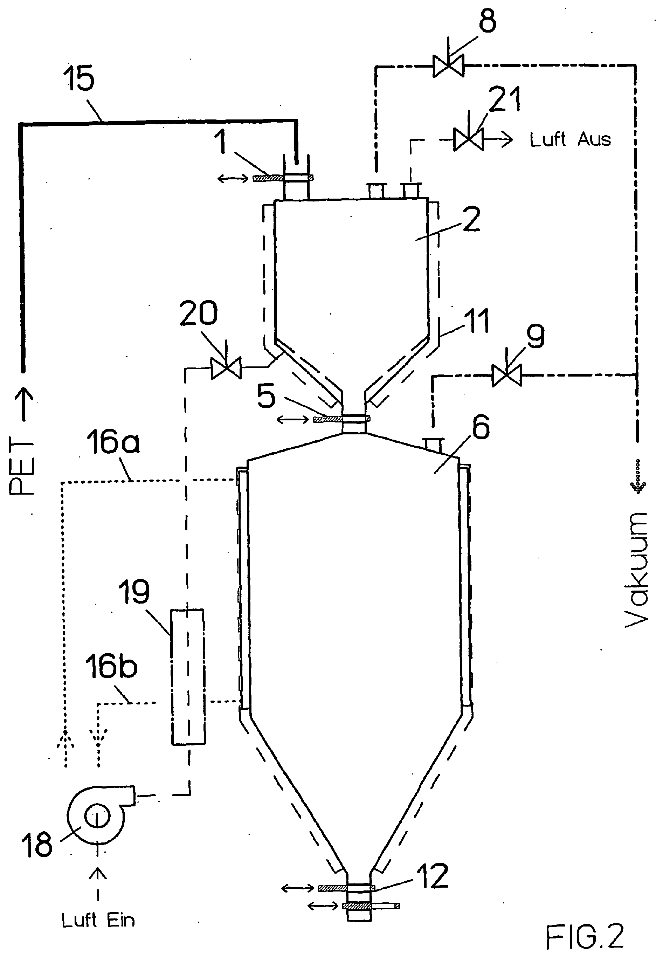

Fig. 2 zeigt schematisch eine etwas einfachere Ausführung der oben erläuterten Vorrichtung, bei der im Vorwärmbehälter ein leichter oxidativer Abbau des Materials (Gelbfärbung) in Kauf genommen wird, was bei Recyclinganwendungen toleriert werden kann. Die Ausführungsform von Fig. 2 unterscheidet sich von jener nach Fig. 1 vor allem dadurch, dass der Vorwärmbehälter 2 über kein Rührwerk und keine Konvektions-Wandheizung verfügt. Statt der Konvektionswärme der Behälterflächen wird das Polyester-Material im Vorwärmbehälter 2 durch ein Wärmeträgermedium, im vorliegenden Fall Luft, beheizt. Die Luft wird in Form von Umgebungsluft durch ein Gebläse 18 angesaugt, in einem Lufterhitzer 19 auf die gewünschte Wärmebehandlungstemperatur von z.B. 220°C erwärmt, durch ein Einlassventil 20 dem Vorwärmbehälter 2 zugeführt, durch den Vorwärmbehälter und damit durch das darin befindliche Polyester-Material strömen gelassen und über ein Auslassventil 21 wieder abgesaugt. Bessere Erwärmung des Polyester-Materials könnte durch Stickstoff oder Trockenluft erzielt werden. Dennoch wurden auch bei dieser einfachen Ausführung mittels Erwärmung des Polyester-Materials durch Umgebungsluft akzeptable Werte erzielt.

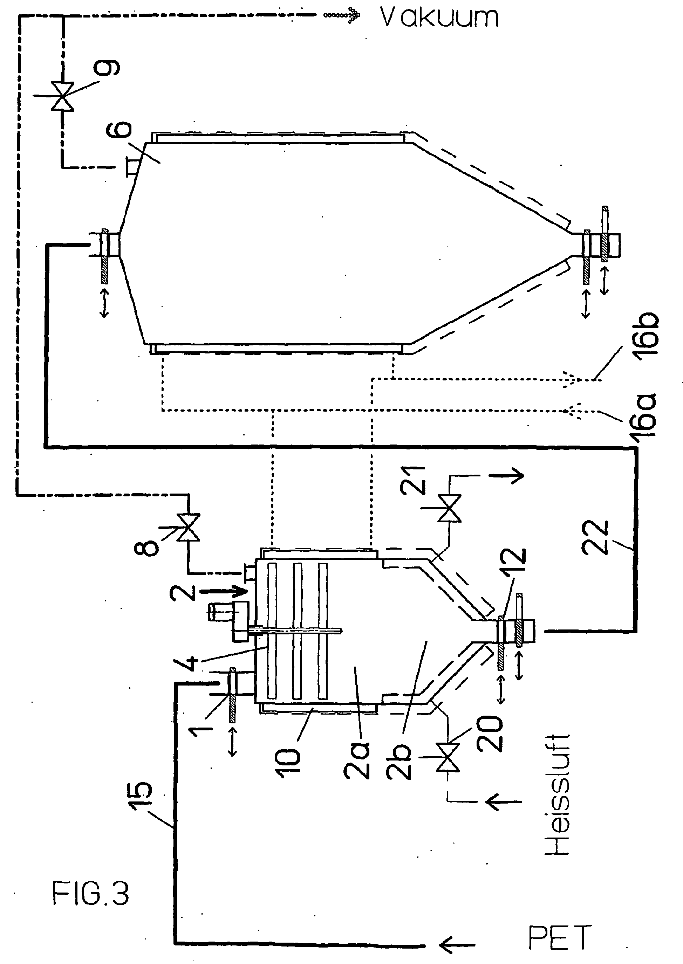

Eine Weiterentwicklung der Ausführungsform von Fig. 2 mit Luftbeheizung des Vorwärmbehälters ist in Fig. 3 dargestellt. Dabei wird der Vorwärmbehälter 2 in zwei verschiedene Temperaturzonen unterteilt, wobei in der oberen Zone 2a durch eine Wandheizung 10 und ein beheiztes Rührwerk 4 eine Temperatur des eingebrachten Polyester-Materials von z.B. 180°C erzielt wird, die über der Kristallinisierungstemperatur des Polyester-Materials liegt. Die Beheizung im oberen Bereich könnte auch mit Heißluft erfolgen. Im unteren Bereich des Vorwärmbehälters 2 wird durch die Zuführung von Heißluft durch das Einlassventil 20 eine Temperaturzone 2b von ca. 220°C geschaffen, wobei die Heißluft auf der gegenüberliegenden Seite durch das Auslassventil 21 wieder abgesaugt wird. Das vorbehandelte Polyester-Material wird über das Schleusensystem 12 ausgetragen und über eine vakuumdichte Zuführleitung 22 dem Wärmebehandlungsbehälter 6 zugeführt. Der Vorwärmbehälter wirkt somit als Kristallinisator, in dem das Polyester über die Kristallinisationstemperatur erwärmt wird, um aneinander anklebende Polyester-Granulatkörper voneinander zu lösen und somit wieder die Rieselfähigkeit der Körner für die weitere Behandlung herzustellen, was bei Bearbeitungsvorgängen, die ohne Rührwerk stattfinden, von großer Bedeutung ist. In kristalliner Form nimmt das Granulat darüber hinaus weniger Feuchtigkeit auf und erlaubt auch kürzere Verweilzeiten während der Trocknung (z.B. nach vorausgegangenen Waschvorgängen).

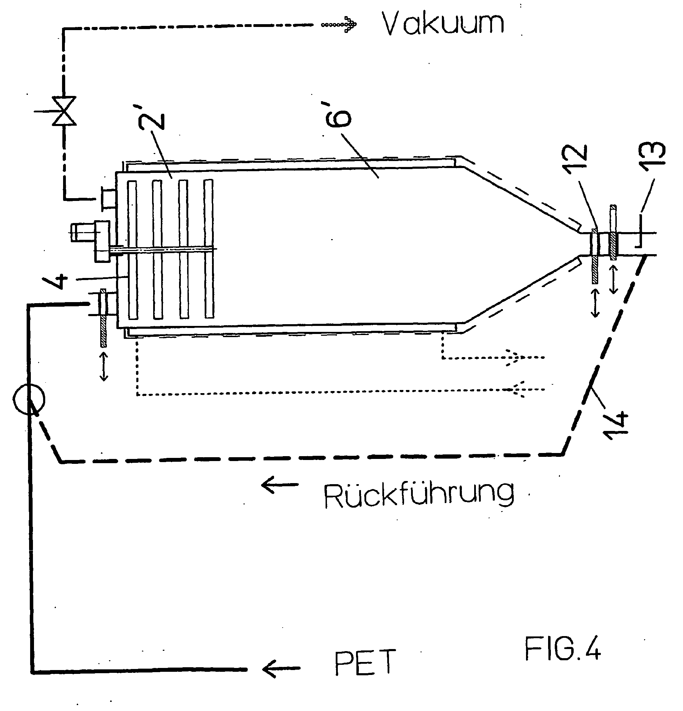

Fig. 4 schließlich zeigt eine besonders einfache und kostengünstig herstellbare Ausführungsform der Erfindung, bei der der Vorwärmbehälter 2' mit dem Rührwerk 4 in den oberen Abschnitt des Wärmebehandlungsbehälters 6' integriert ist. Weiters ist am Ausgang des Wärmebehandlungsbehälters (6') ein Temperatursensor (13) zur Messung der Temperatur des Polyester-Materials und eine Rückführleitung (14) für das Polyester-Material an den Vorwärmbehälter 2' vorgesehen, wobei der Polyestermaterial-Austragsstrom bei zu geringer Temperatur in die Rückführleitung zurückgeführt wird. Dadurch kann in der Anfahrphase der Vorrichtung oder nach einem längeren Stillstand, durch den das im Wärmebehandlungsbehälter befindliche Polyester-Material unter die Wärmebehandlungstemperatur absinkt, darauf verzichtet werden, den Wärmebehandlungsbehälter ganz zu leeren und das ausgetragene Material zu extrudieren und wieder in den Behandlungsprozess zu bringen, sondern das Polyester-Material wird solange im Kreislauf geführt, bis es die erforderliche Temperatur am Ausgang besitzt, wobei es in diesem Fall auch die notwendige Verweilzeit erfahren hat.

## Patentansprüche

1. Verfahren zur Erhöhung der Grenzviskosität von Polyester-Material mittels Festphasenpolymerisation, wobei das Polyester-Material in einem Wärmebehandlungsbehälter wärmebehandelt wird und das Polyester-Material vor seiner Förderung in den Wärmebehandlungsbehälter in einen Vorwärmbehälter eingebracht wird, **dadurch gekennzeichnet, dass** das Polyester-Material in dem Vorwärmbehälter unter Vakuum, vorzugsweise zwischen 0,1 und 10 mbar, auf eine Wärmebehandlungstemperatur des Wärmebehandlungsbehälters oder darüber, vorzugsweise im Wesentlichen auf die Wärmebehandlungstemperatur, erwärmt wird, wobei die Wärmeübertragung auf das Polyester-Material im Vorwärmbehälter mittels eines beheizten Rührwerks erfolgt, und das Polyester-Material nach Erreichen dieser Temperatur an den Wärmebehandlungsbehälter abgegeben wird, wobei der Wärmebehandlungsbehälter unter Vakuum, vorzugsweise zwischen 0,1 und 10 mbar, gehalten wird.

2. Verfahren nach Anspruch 1, **dadurch gekennzeichnet, dass** der Vorwärmbehälter doppelwandig ausgeführt ist und beheizt wird, indem durch den Hohlraum der Doppelwand ein Wärmeträgermedium geführt wird.

3. Verfahren nach Anspruch 1 oder 2, **dadurch gekennzeichnet, dass** das erwärmte Polyester-Material chargenweise aus dem Vorwärmbehälter an den Wärmebehandlungsbehälter abgegeben wird.

4. Verfahren nach einem der Ansprüche 1 bis 3, **dadurch gekennzeichnet, dass** die Wärmebehandlungstemperatur zumindest 180 °C beträgt.

5. Verfahren nach einem der Ansprüche 1 bis 4, **dadurch gekennzeichnet, dass** der Wärmebehandlungsbehälter mittels einer Wandheizung beheizt wird.

6. Verfahren nach einem der Ansprüche 1 bis 5, **dadurch gekennzeichnet, dass** der Vorwärmbehälter in den Eingangsbereich des Wärmebehandlungsbehälters integriert ist.

7. Verfahren nach einem der Ansprüche 1 bis 6, **dadurch gekennzeichnet, dass** am Ausgang des Wärmebehandlungsbehälters die Temperatur des Polyester-Materials gemessen wird und bei ungenügender Temperatur das Polyester-Material an den Vorwärmbehälter oder den Eingang des Wärmebehandlungsbehälters zurückgeleitet wird.

8. Verfahren nach einem der Ansprüche 1 bis 7, **dadurch gekennzeichnet, dass** das zu behandelnde Polyester-Material einer Vielzahl von Vorwärmbehältern mit nachgeschalteten Wärmebehandlungsbehältern, oder einem Vorwärmbehälter mit mehreren nachgeschalteten Wärmebehandlungsbehältern zugeführt wird.

9. Verfahren nach einem der Ansprüche 1 bis 8, **dadurch gekennzeichnet, dass** das zu behandelnde Polyester-Material vor seinem Einbringen in den Vorwärmbehälter granuliert wird.

10. Verfahren nach einem der Ansprüche 1 bis 9, **dadurch gekennzeichnet, dass** das wärmebehandelte Polyester-Material nach dem Austrag aus dem Wärmebehandlungsbehälter noch im erwärmten Zustand einem Extruder oder einer schmelzeaufbereitenden Einrichtung, z.B. einer Spritzgussmaschine übergeben wird.

11. Vorrichtung zur Erhöhung der Grenzviskosität von Polyester-Material mittels Festphasenpolymerisation durch Wärmebehandlung in einem Wärmebehandlungsbehälter, **dadurch gekennzeichnet, dass** dem Wärmebehandlungsbehälter (6) ein Vorwärmbehälter (2) zur Erwärmung des Polyester-Materials auf eine Wärmebehandlungstemperatur des Wärmebehandlungsbehälters oder darüber, vorzugsweise im Wesentlichen auf die Wärmebehandlungstemperatur, vorgeschaltet ist, wobei an den Vorwärmbehälter (2) und den Wärmebehandlungsbehälter (6) ein Vakuum, vorzugsweise zwischen 0,1 und 10 mbar, anlegbar ist und der Vorwärmbehälter (2) ein beheiztes Rührwerk (4) aufweist. -

12. Vorrichtung nach Anspruch 11, **dadurch gekennzeichnet, dass** der Vorwärmbehälter (2) über einen Schieber (5) mit dem Wärmebehandlungsbehälter (6) verbunden ist.

13. Vorrichtung nach Anspruch 11 oder 12, **dadurch gekennzeichnet, dass** der Wärmebehandlungsbehälter (6) eine Wandheizung (10) aufweist, oder ein unbeheizter, Behälter mit Wärmeisolierung (11) ist.

14. Vorrichtung nach Anspruch 11, **dadurch gekennzeichnet, dass** der Vorwärmbehälter (2') in den Eingangsbereich des Wärmebehandlungsbehälters (6') integriert ist. (Fig. 4)

15. Vorrichtung nach einem der Ansprüche 11 bis 14, **dadurch gekennzeichnet, dass** am Ausgang des Wärmebehandlungsbehälters (6') ein Temperatursensor (13) zur Messung der Temperatur des Polyester-Materials und eine Rückführleitung (14) für das Polyester-Material an den Vorwärmbehälter oder den Eingang des Wärmebehandlungsbehälters vorgesehen ist, wobei der Polyestermaterial-Austragsstrom in Abhängigkeit von seiner gemessenen Temperatur in die Rückführleitung umschaltbar ist.

16. Vorrichtung nach einem der Ansprüche 11 bis 15, **dadurch gekennzeichnet, dass** sie eine Vielzahl an Vorwärmbehältern mit nachgeschalteten Wärmebehandlungsbehältern, oder einen Vorwärmbehälter mit einer Vielzahl nachgeschalteter Wärmebehandlungsbehälter aufweist.

17. Vorrichtung nach Anspruch 11, **dadurch gekennzeichnet, dass** dem Vorwärmbehälter eine Granuliereinheit für das Polyester-Material vorgeschaltet ist.

18. Vorrichtung nach Anspruch 11, **dadurch gekennzeichnet, dass** dem Wärmebehandlungsbehälter ein Extruder oder eine schmelzeaufbereitende Einrichtung, z.B. eine Spritzgussmaschine, nachgeschaltet ist.

## Claims

1. A process for increasing the intrinsic viscosity of a polyester material by solid-state polymerization, wherein the polyester material is heat-treated in a heat treatment container and the polyester material is introduced into a preheating container prior to being conveyed into the heat treatment container, **characterized in that** the polyester material is heated in the preheating container under vacuum, preferably at between 0.1 and 10 mbar, to a heat treatment temperature of the heat treatment container or to a temperature above that, preferably to essentially the heat treatment temperature, with the heat transfer to the polyester material being effected in the preheating container by means of a heated agitator, and the polyester material is delivered to the heat treatment container after having reached said temperature, with the heat treatment container being maintained under vacuum, preferably at between 0.1 and 10 mbar.

2. A process according to claim 1, **characterized in that** the preheating container has a double-walled design and is heated by conducting a heat-transfer medium through the cavity of the double wall.

3. A process according to claim 1 or 2, **characterized in that** the heated polyester material is delivered in batches from the preheating container to the heat treatment container.

4. A process according to any of claims 1 to 3, **characterized in that** the heat treatment temperature amounts to at least 180 °C.

5. A process according to any of claims 1 to 4, **characterized in that** the heat treatment container is heated via wall heating.

6. A process according to any of claims 1 to 5, **characterized in that** the preheating container is integral with the entrance area of the heat treatment container.

7. A process according to any of claims 1 to 6, **characterized in that**, at the outlet of the heat treatment container, the temperature of the polyester material is measured and the polyester material is returned to the preheating container or the inlet of the heat treatment container if the temperature is insufficient.

8. A process according to any of claims 1 to 7, **characterized in that** the polyester material to be treated is supplied to a plurality of preheating containers comprising downstream heat treatment containers or to one preheating container comprising several downstream heat treatment containers.

9. A process according to any of claims 1 to 8, **characterized in that** the polyester material to be treated is granulated prior to being introduced into the preheating container.

10. A process according to any of claims 1 to 9, **characterized in that** the heat-treated polyester material, after having being discharged from the heat treatment container, is delivered still in the heated state to an extruder or a melt-processing device, for example an injection-moulding machine.

11. A device for increasing the intrinsic viscosity of a polyester material by solid-state polymerization via a heat treatment in a heat treatment container, **characterized in that** the heat treatment container (6) is preceded by a preheating container (2) for heating the polyester material to a heat treatment temperature of the heat treatment container or to a temperature above that, preferably to essentially the heat treatment temperature, wherein a vacuum, preferably of between 0.1 and 10 mbar, can be applied to the preheating container (2) and to the heat treatment container (6) and the preheating container (2) is provided with a heated agitator (4).

12. A device according to claim 11, **characterized in that** the preheating container (2) is connected with the heat treatment container (6) via a slide (5).

13. A device according to claim 11 or 12, **characterized in that** the heat treatment container (6) is provided with wall heating (10) or is an unheated container with heat insulation (11).

14. A device according to claim 11, **characterized in that** the preheating container (2') is integral with the entrance area of the heat treatment container (6'). (Fig. 4)

15. A device according to any of claims 11 to 14, **characterized in that** a temperature sensor (13) for measuring the temperature of the polyester material and a conduit (14) for returning the polyester material to the preheating container or the inlet of the heat treatment container is provided at the outlet of the heat treatment container (6'), with the polyestermaterial discharge stream being redirectable into the return conduit depending on its measured temperature.

16. A device according to any of claims 11 to 15, **characterized in that** it exhibits a plurality of preheating containers comprising downstream heat treatment containers or one preheating container comprising a plurality of downstream heat treatment containers.

17. A device according to claim 11, **characterized in that** the preheating container is preceded by a granulation unit for the polyester material.

18. A device according to claim 11, **characterized in that** an extruder or a melt-processing device, for example an injection-moulding machine, is arranged downstream of the heat treatment container.

## Revendications

1. Procédé pour augmenter la viscosité limite de matériau polyester au moyen d'une polymérisation en phase solide, le matériau de polyester étant traité à chaud dans un récipient de traitement thermique et le matériau polyester étant introduit dans un récipient de préchauffage avant son transport dans le récipient de traitement thermique, **caractérisé en ce que** le matériau de polyester est réchauffé dans le récipient de préchauffage sous vide, de préférence entre 0,1 et 10 mbar, à une température de traitement thermique du récipient de traitement thermique ou au-dessus, de préférence sensiblement à la température de traitement thermique, dans lequel la transmission thermique sur le matériau polyester dans le récipient de préchauffage a lieu au moyen d'un mélangeur chauffé, et après avoir atteint cette température, le matériau polyester est délivré au récipient de traitement thermique, le récipient de traitement thermique étant maintenu sous vide, de préférence entre 0,1 et 10 mbar.

2. Procédé selon la revendication 1, **caractérisé en ce que** le récipient de préchauffage est réalisé à double paroi et est chauffé dans la mesure où un fluide caloporteur est mené à travers la cavité de la double paroi.

3. Procédé selon la revendication 1 ou 2, **caractérisé en ce que** le matériau polyester chauffé est délivré par charge depuis le récipient de préchauffage au récipient de traitement thermique.

4. Procédé selon l'une des revendications 1 à 3, **caractérisé en ce que** la température de traitement thermique est d'au moins 180°C.

5. Procédé selon l'une des revendications 1 à 4, **caractérisé en ce que** le récipient de traitement thermique est chauffé au moyen d'un chauffage de paroi.

6. Procédé selon l'une des revendications 1 à 5, **caractérisé en ce que** le récipient de préchauffage est intégré à la zone d'entrée du récipient de traitement thermique.

7. Procédé selon l'une des revendications 1 à 6, **caractérisé en ce que** à la sortie du récipient de traitement thermique, la température du matériau polyester est mesurée et, en cas de température insuffisante, le matériau polyester est ramené au récipient de préchauffage ou à l'entrée du récipient de traitement thermique.

8. Procédé selon l'une des revendications 1 à 7, **caractérisé en ce que** le matériau polyester à traiter est amené à une multitude de récipients de préchauffage avec récipients de traitement thermique montés en aval ou à un récipient de préchauffage avec plusieurs récipients de traitement thermique montés en aval.

9. Procédé selon l'une des revendications 1 à 8, **caractérisé en ce que** le matériau polyester à traiter est granulé avant d'être introduit dans le récipient de préchauffage.

10. Procédé selon l'une des revendications 1 à 9, **caractérisé en ce qu'**après avoir été évacué hors du récipient de traitement thermique, le matériau polyester traité thermiquement est délivré à l'état encore chaud à une extrudeuse ou à un dispositif d'alimentation en produit fondu, par exemple à une machine à moulage par injection.

11. Dispositif pour augmenter la viscosité limite de matériau polyester au moyen d'une polymérisation en phase solide par traitement thermique dans un récipient de traitement thermique, **caractérisé en ce qu'**en amont du récipient de traitement thermique (6) est monté un récipient de préchauffage (2) pour chauffer le matériau polyester à une température de traitement thermique du récipient de traitement thermique ou au-dessus, de préférence sensiblement à la température de traitement thermique, un vide, de préférence entre 0,1 et 10 mbar pouvant être appliqué au récipient de préchauffage (2) et au récipient de traitement thermique (6), et le récipient de préchauffage (2) présentant un agitateur (4) chauffé.

12. Dispositif selon la revendication 11, **caractérisé en ce que** le récipient de préchauffage (2) est relié au récipient de traitement thermique par un tiroir (5).

13. Dispositif selon la revendication 11 ou 12, **caractérisé en ce que** le récipient de traitement thermique (6) présente un chauffage de paroi (10) ou est un récipient non chauffé avec isolation thermique (11).

14. Dispositif selon la revendication 11, **caractérisé en ce que** le récipient de préchauffage (2') est intégré dans la zone d'entrée du récipient de traitement thermique (6') (figure 4).

15. Dispositif selon l'une des revendications 11 à 14, **caractérisé en ce qu'**à la sortie du récipient de traitement thermique (6') est prévu un capteur de température (13) pour mesurer la température du matériau polyester et une conduite de remise en circulation du matériau polyester au récipient de préchauffage ou à l'entrée du récipient de traitement thermique, le débit de sortie du matériau polyester étant commutable dans la conduite de remise en circulation en fonction de sa température mesurée.

16. Dispositif selon l'une des revendications 11 à 15, **caractérisé en ce qu'**il présente une multitude de récipients de préchauffage avec récipients de traitement thermique montés en aval ou un récipient de préchauffage avec une multitude de récipients de traitement thermique montés en aval.

17. Dispositif selon la revendication 11, **caractérisé en ce qu'**une unité de granulation pour le matériau polyester est montée en amont du récipient de préchauffage.

18. Dispositif selon la revendication 11, **caractérisé en ce qu'**une extrudeuse ou un dispositif d'alimentation en produit fondu, par exemple une machine à moulage par injection, est monté en aval du récipient de traitement thermique.
